# EUROPÄISCHE PATENTSCHRIFT

(11) **EP 1 098 063 B1**
(45) Veröffentlichungstag und Bekanntmachung des Hinweises auf die Patenterteilung: **14.02.2007**
(21) Anmeldenummer: 00119973.6
(22) Anmeldetag: 14.09.2000
(51) Int. Cl.: E06B 9/72, F16D 49/02, F16D 67/00

(54) **Rohrmotor**
Tubular motor
Moteur tubulaire

(30) Priorität: 05.11.1999 DE 19953200
(43) Veröffentlichungstag der Anmeldung: 09.05.2001
(73) Patentinhaber: Valeo Motoren und Aktuatoren GmbH, 74321 Bietigheim-Bissingen (DE)
(72) Erfinder: Bruhn, Rainer, 74379 Ingersheim (DE)
(74) Vertreter: Jahn, Wolf-Diethart

(56) Entgegenhaltungen:
- EP-A- 0 810 347
- EP-A- 0 848 137
- DE-A- 3 504 489
- DE-A- 4 237 385

## Beschreibung

Die Erfindung betrifft einen Rohrmotor mit einem in einem Antriebsgehäuse angeordneten elektromotorischen Antrieb mit einer Antriebswelle, mit einem in einem Getriebegehäuse angeordneten, mit der Antriebswelle über eine Getriebeeingangswelle gekoppelten, eine Abtriebswelle aufweisenden Untersetzungsgetriebe und mit einer eine Schlingfeder aufweisenden, gegen das Getriebegehäuse wirkenden Schlingfederbremse zur Drehsicherung der Abtriebswelle bei insbesondere abgeschaltetem Antrieb, wobei die Abtriebswelle und die Getriebeeingangswelle mit der Schlingfeder zusammenwirken.

Solche Rohrmotoren finden insbesondere zum elektrischen Antrieb von einer Wickelwelle eines Rollladens, einer Jalousie, einer Markise, eines Rollvorhangs, einer Rolltüre, eines Garagentores und dergl. Verwendung. Bei einer solchen Anordnung muss vorgesehen sein, dass die die Wickelwelle treibende Abtriebswelle des Rohrmotors bei abgeschaltetem Antrieb drehsicher arretiert ist. Damit wird vermieden, dass der beispielsweise Rollladen aufgrund seines Eigengewichts die mit dem Abtrieb des Rohrmotors gekoppelte Wickelwelle abwickelt und den Rollladen eigentätig schließt.

Zur Drehsicherung der Abtriebswelle ist beispielsweise aus der EP 0 810 347 A1, die als nächstliegender Stand der Technik betrachtet wird, ein Untersetzungsgetriebe für einen Rohrmotor mit einer Schlingfederbremse bekanntgeworden. Die Schlingfeder einer solchen Schlingfederbremse koppelt bei sich nicht drehender Antriebswelle aufgrund ihres Entspannungsbestrebens die Abtriebswelle kraftschlüssig mit dem Getriebegehäuse. Bei Drehung der Antriebswelle durch den Antrieb wird die Schlingfeder zusammengezogen, wodurch die kraftschlüssige Kopplung gelöst und ein Verdrehen der Abtriebswelle durch den Antrieb möglich wird.

Die direkte Kopplung der Schlingfeder mit dem Getriebegehäuse weist veschiedene Nachteile auf. Zum einen ist aufgrund des Entspannungsbestrebens der Schlingfeder eine Montage der Schlingfeder nur schwerlich, bzw. nur unter Verwendung von Hilfsmitteln, möglich. Dabei muss die Schlingfeder entgegen ihrem Entspannungsbestreben zusammengedreht bzw. zusammengezogen werden, um sie in den dafür vorgesehen Absatz des Getriebegehäuses einführen zu können.

Ein weiterer Nachteil ist, dass die Schlingfeder in eingebautem Zustand aufgrund ihres Entspannungsbestrebens radial gegen die Innenseite des Getriebegehäuses wirkt. Um diese Radialkräfte aufnehmen zu können, muss das Getriebegehäuse eine entsprechende Wandstärke aufweisen oder aus einem die Kräfte kompensierenden Material, insbesondere Metall, sein. Dies bringt den Nachteil mit sich, dass das Getriebegehäuse in seinen Abmessungen nicht beliebig klein konzipiert werden kann oder, aufgrund des verwendeten Materials, entsprechend schwer ausfällt.

Der vorliegenden Erfindung liegt deshalb die Aufgabe zugrunde, einen Rohrmotor mit einem Untersetzungsgetriebe vorzuschlagen, welcher zum einen auf einfache Art und Weise montierbar und zum anderen sehr platzsparend ausführbar ist.

Zur Lösung der Aufgabe wird ein Rohrmotor der eingangs beschriebenen Art vorgeschlagen, der vorsieht, dass zwischen der Schlingfeder und dem Getriebegehäuse ein an dem Getriebegehäuse drehfest angeordnetes Ringelement vorhanden ist, das ein von der Abtriebswelle eingeleitetes Moment in das Getriebegehäuse ableitet.

Die Erfindung weist dabei den Vorteil auf, dass die Schlingfeder in das Ringelement vormontiert werden kann, so dass die Endmontage des Rohrmotors und insbesondere des Untersetzungsgetriebes auf einfache Art und Weise möglich ist. Das Entspannungsbestreben der Schlingfeder behindert die Endmontage des Rohrmotors nicht.

Die Erfindung weist außerdem den Vorteil auf, dass aufgrund des Ringelements zwischen Schlingfeder und Getriebegehäuse keine aus der Federspannung der Schlingfeder resultierenden Radialkräfte auf das Getriebegehäuse wirken. Die von der Schlingfeder eingeleiteten Radialkräfte werden vollständig von dem Ringelement aufgenommen. Damit kann eine relativ schwache Ausgestaltung des Getriebegehäuses ermöglicht werden.
Vorteilhafterweise kann das Getriebegehäuse aus Kunststoff, insbesondere als Spritzgussteil, hergestellt werden.

Bei einer besonders bevorzugten Ausführungsform der Erfindung ist vorgesehen, dass die Getriebegehäuseinnenseite eine Innenverzahnung und die der Getriebegehäuseinnenseite zugewandte Mantelfläche des Ringelements eine der Innenverzahnung entsprechende Außenverzahnung aufweist. Durch ein Ineinandergreifen der Außenverzahnung des Ringelements und der Innenverzahnung der Getriebegehäuseinnenseite kann das Ringelement auf einfache Art und Weise an dem Getriebegehäuse drehfest angeordnet werden.

Bei einer anderen Ausgstaltung der Erfindung ist das Ringelement in das Getriebegehäuse einrastbar. Damit kann insbesondere bei der Montage des Rohrmotors ein Herausfallen des Ringelements aus dem Getriebegehäuse vorgebeugt werden.

Bei einer weiteren Variante der Erfindung ist vorgesehen, dass das Ringelement an seinem Umfang Rasthaken oder Rastbuchten aufweist, die mit an der Getriebegehäuseinnenseite angeordneten Rastbuchten oder Rasthaken verrastbar sind. Solche Rasthaken oder Rastbuchten bieten eine gute Sicherung des Ringelements in dem Getriebegehäuse, und sind zudem auf einfache und kostengünstige Art realisierbar. Insbesondere kann vorgesehen sein, dass das Ringelement Aussparungen als Unterstützung der Federwirkung eines Rasthakens aufweist, um ein plastisches Verformen des Ringelements zu verhindern.

Bei einer anderen Ausführungsform der Erfindung weist das Untersetzungsgetriebe ein Planetenradgetriebe auf, wobei das Planetenradgetriebe als Getriebeeingangswelle ein Sonnenrad aufweist. Gerade über einem Planetenradgetriebe ist eine sehr hohe Untersetzung mit geringem Reibungsverlusten möglich. Das Sonnenrad als Getriebeeingangswelle wirkt dabei mit der Abtriebswelle und der Schlingfederbremse zusammen.

Bei einer diesbezüglichen Ausgestaltung der Erfindung weist das Planetenradgetriebe Planeten auf, die an der Innenverzahnung der Getriebegehäuseinnenseite abrollen. Damit kommt der Innenradverzahnung der Getriebegehäuseinnenseite eine doppelte Aufgabe zu. Zum einen rollen an ihr die Planeten ab, zum anderen dient sie als Verdrehsicherung des Ringelements.

Eine weitere Ausführungsform der Erfindung kennzeichnet sich dadurch, dass die der Schlingfeder zugewandte Seite des Sonnenrads mehrere, insbesondere zwei im Querschnitt kreisförmig gekrümmte Stege aufweist, um welche die Schlingfeder angeordnet ist. Damit wird eine Kopplung des Sonnenrads mit der Schlingfeder erreicht.

Vorteilhafterweise weist ein Steg einen Absatz zur Aufnahme des einen, zur Längsachse des Rohrmotors weisenden Endes der Schlingfeder auf. Dadurch wird einer möglichen Einklemmung des einen Endes der Schlingfeder entgegengewirkt.

Eine weitere Ausgestaltung der Erfindung sieht vor, dass die der Schlingfeder zugewandte Seite der Abtriebswelle mehrere, insbesondere zwei Mitnahmestege aufweist, die mit einem definierten Spiel in die Freiräume zwischen den Stegen des Sonnenrades eingreifen. Das definierte Spiel zwischen den Stegen und Mitnahmestegen ist erforderlich, um ein Zusammendrehen und damit ein Lösen des Kraftschlusses zwischen Schlingfeder und Ringelement, zu ermöglichen.

Eine weitere Ausgestaltung der Erfindung sieht vor, dass ein Mitnahmesteg einen Absatz zur Aufnahme des anderen, zur Längsachse des Rohrmotors weisenden Endes der Schlingfeder aufweist. Damit wird einer Einklemmung des anderen Endes der Schlingfeder entgegengewirkt.

Vorteilhafterweise kann erfindungsgemäß vorgesehen sein, dass das Sonnenrad eine Seele aufweist. Insbesondere dann, wenn das Sonnenrad aus Kunststoff ausgestaltet ist, kann eine Seele das mit dem Sonnenrad übertragbare Drehmoment erhöhen.

Eine solche Seele weist vorteilhafterweise einen Sechskant-Querschnitt oder einen Torx-Querschnitt auf. Gerade diese beiden Querschnitte eignen sich besonders gut, um hohe Drehmomente zu übertragen.

Bei einer anderen, ebenfalls sehr vorteilhaften Ausgestaltung der Erfindung, ist zwischen dem Antrieb und der Antriebswelle ein Zahnradgetriebe vorhanden. Durch ein solches vorgeschaltetes Zahnradgetriebe kann die Untersetzung des Rohrmotors wesentlich erhöht werden. Durch die Kombination des Zahnradgetriebes mit dem Plantenradgetriebe sind Untersetzungsverhältnisse von 1:40 realisierbar. Die Schlingfeder wirkt bei einer solchen Ausgestaltung nicht direkt am Abtrieb sondern zwischen dem Zahnradgetriebe und dem beispielsweise Planetengetriebe. Durch die Untersetzung des des Zahnradgetriebes liegen an der Schlingfeder geringere Kräfte an, wodurch die Schlingfeder vorteilhafterweise kleiner dimensioniert werden kann.

Dabei kann vorgesehen sein, dass die unmittelbar an dem Antrieb angeordnete Abtriebswelle ein insbesondere schrägverzahntes Ritzel aufweist, welches wenigstens ein zu der Antriebswelle axial verlaufendes Zahnrad antreibt. Das Ritzel kann dabei vorteilhafterweise einen Durchmesser von wenigen Millimetern und eine extreme Schrägverzahnung aufweisen.

In Weiterbildung des Zahnradgetriebes ist das wenigstens eine Zahnrad auf einer Zahnradachse drehbar gelagert, wobei die Zahnradachse an der der Schlingfederbremse zugewandten Seite des Antriebsgehäuses angeordnet ist. Eine solche Anordnung der Zahnradachse bietet sich deshalb an, weil damit die Lage des Antriebsgehäuses zu dem Ritzel unveränderbar ist.

Um eine höhere Untersetzung des Zahnradgetriebes zu erreichen, weist das wenigstens eine Zahnrad eine zweite Untersetzungsstufe auf, die als Ritzel ausgestaltet ist und ein Hohlrad antreibt. Aufgrund der sehr begrenzten Platzverhältnisse in einem Rohrmdtor bietet sich als weitere Übersetzungsstufe die Verwendung eines Hohlrads an.

Bei einer besonders bevorzugten Ausgestaltungsform des Zahnradgetriebes sind zwei symmetrisch angeordnete Zahnräder vorhanden, die je eine zweite Untersetzungsstufe aufweisen und ein gemeinsames Hohlrad antreiben. Durch eine solche symmetrische Anordnung werden insbesondere unerwünschte Kräfte kompensiert.

Vorteilhafterweise bildet bei einer weiteren Ausgestaltung der Erfindung die dem Antrieb abgewandte Seite des Hohlrades die mit der Schlingfederbremse und der Getriebeeingangswelle, insbesondere dem Sonnenrad, zusammenwirkende Antriebswelle. Damit wird ein Rohrmotor mit sehr günstigen und funktionssicheren Eigenschaften bereitgestellt.

Außerdem kann erfindungsgemäß vorteilhafterweise vorgesehen sein, dass die einzelnen Bauteile des Rohrmotors zur Endmontage des Rohrmotors miteinander verrastbar sind. Damit kann die Montage des Rohrmotors ohne spezielle Werkzeuge erfolgen, was sich auch bei einer Demontage des Rohrmotors günstig auswirkt. Einem Herausfallen der einzelnen Bauteile des Rohrmotors wird damit entgegengewirkt.

Weitere vorteilhafte Ausgestaltungen und Einzelheiten der Erfindung sind der folgenden Beschreibung zu entnehmen, in der die Erfindung anhand des in der Zeichnung dargestellten Ausführungsbeispiels näher beschrieben und erläutert ist.

Es zeigen:
- Figur 1: einen Längsschnitt durch einen erfindungsgemäßen Rohrmotor;
- Figur 2: das Planetenuntersetzungsgetriebe mit Schlingfederbremse des Rohrmotors nach Figur 1;
- Figur 3 und Figur 4: die Schlingfeder mit Ringelement in verschiedenen Ansichten;
- Figur 5-7: das Hohlrad des Rohrmotors nach Figur 1 in verschiedenen Ansichten und
- Figur 8-12: verschiedene Ansichten des Sonnenrades des Rohrmotors nach Figur 1.

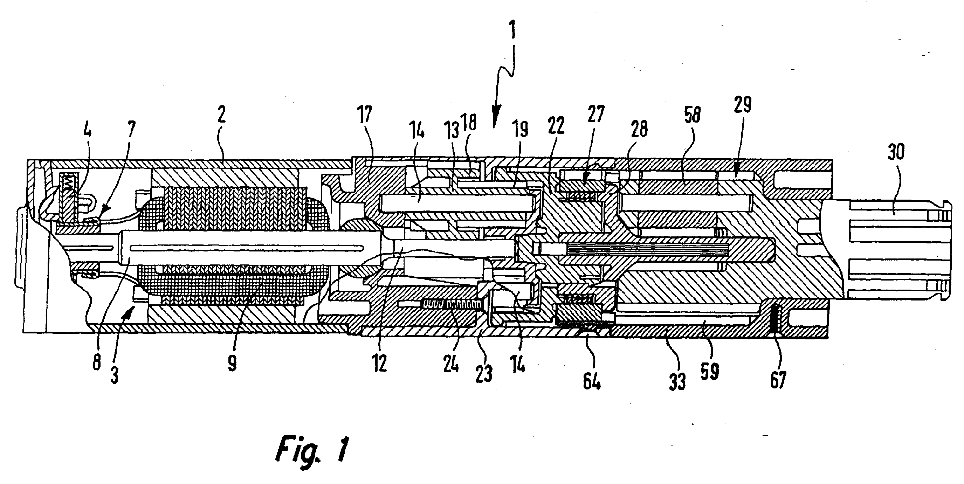

Die Figur 1 zeigt einen Rohrmotor 1 mit einem in einem in einem Antriebsgehäuse 2 angeordneten elektromotorischen Antrieb 3. Der Antrieb 3 weist dabei Bürsten 4 auf, die auf einem Kollektor 7 aufliegen. Außerdem ist eine Antriebswelle 8 deutlich zu erkennen, an welcher ein Läufer 9 angeordnet ist. An dem freien Ende der Antriebswelle 8 ist ein Ritzel 12 mit einer Schrägverzahnung vorhanden. Über das Ritzel 12 werden zwei symmetrisch angeordnete Zahnräder 13, die axial zu der Antriebswelle 8 verlaufen, angetrieben. In der Figur 1 ist lediglich ein Zahnrad 13 zu sehen, da die Figur im Bereich des zweiten Zahnrades eine Schnittlinie zeigt, in der das zweite Zahnrad nicht liegt.

Die Zahnräder 13 sind auf Zahnradachsen 14 drehbar gelagert. Die Zahnradachsen 14 wiederum sind an einem an der dem Ritzel 12 zugewandten, offenen Stirnseite des Antriebsgehäuse 2 angeordneten Getriebehalterung 17 angebracht. Die Getriebehalterung 17 bildet dabei den stirnseitigen Teil des Antriebsgehäuses 2 und ist mit dem Antriebsgehäuse 2 unlösbar verbunden.

Die Zahnräder 13 weisen jeweils zwei Untersetzungsstufen auf, nämlich eine Untersetzungsstufe 18, die mit dem Ritzel 12 kämmt, sowie eine weitere Untersetzungsstufe 19, die als Innenritzel ausgestaltet ist und ein Hohlrad 22 antreibt. Das der Antriebswelle 8 des Antriebs 3 nachgeschaltete Zahnradgetriebe wird von einem rohrartigen Abdeckteil 23 abgedeckt und mittels einer Befestigungsschraube 24 mit der Getriebehalterung 17 verschraubt.

Das so angetriebene Hohlrad 22 wirkt im Folgenden mit einer Schlingfederbremse 27 und mit einem Sonnenrad 28 eines Untersetzungsgetriebes, nämlich eines Planetengetriebes 29 mit einer Abtriebswelle 30 derart zusammen, dass die Abtriebswelle 30 mittels der Schlingfederbremse 27 bei abgeschaltetem Antrieb 3 drehgesichert ist.

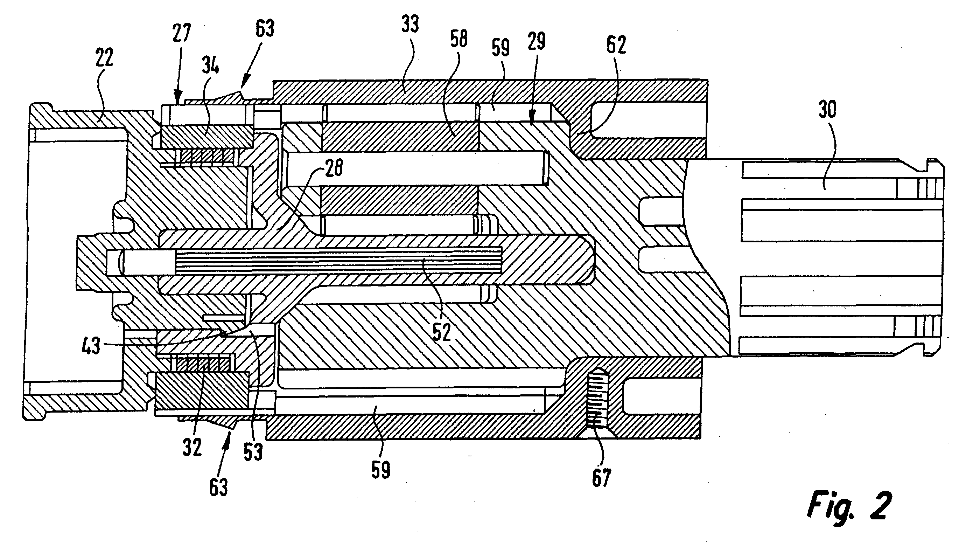

Figur 2 zeigt das Untersetzungsgetriebe, nämlich das Planetengetriebe 21, in vergrößerter Ansicht. Deutlich zu erkennen ist das Hohlrad 22 und das mit dem Hohlrad 22 zusammenwirkende Sonnenrad 28. Zwischen Hohlrad 22 und Sonnenrad 28 ist die Schlingfederbremse 27 angeordnet. Die Schlingfederbremse 27 weist eine Schlingfeder 32 sowie ein zwischen einem Getriebegehäuse 33 und der Schlingfeder 32 an dem Getriebegehäuse 33 drehfest angeordnetes Ringelement 34 auf.

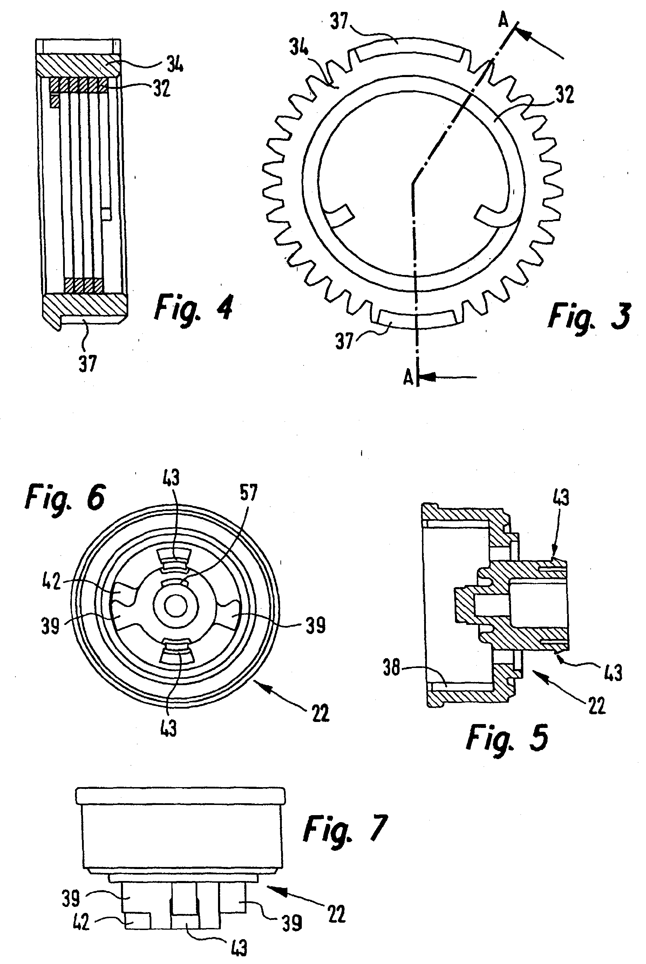

Die Schlingfeder 32 und das Ringelement 34 sind in Figur 3 und 4 als Einzelteildarstellung gezeigt. Deutlich zu erkennen ist, dass an der Mantelfäche des Ringelements 34 eine Außenverzahnung vorgesehen ist. In Figur 3, in welcher das Ringelement 34 in Vorderansicht gezeigt ist, ist außerdem deutlich zu erkennen, dass die Schlingfeder 32 zwei freie Enden aufweist, welche Richtung Längsachse des Ringelements 34 bzw. des gesamten Rohrmotors 1 weisen.

Der Umfangsbereich des Ringelements 33 weist zwei Aussparungen 37 auf, welche zur Aufnahme von Rasthaken vorgesehen sind und ein Einrasten des Ringelements 34 an dem Getriebegehäuse 33 ermöglichen sollen. Auch in Figur 4, die einen Schnitt entlang der Linie A/A nach Figur 3 zeigt, ist eine Aussparung 37 deutlich sichtbar.

Aufgrund der Entspannungsneigung der Schlingfeder 32 drückt die Schlingfeder 32 radial gegen die Innenseite des Ringelements 34. Damit ist ein Verdrehen der Schlingfeder 32 gegenüber dem Ringelement 34 nur dann möglich, wenn die Schlingfeder 32 entgegen ihrer Entspannungsneigung gedreht wird.

In den Figuren 5, 6 und 7 ist das Hohlrad 22 in Einzelteildarstellung gezeigt. Das Hohlrad 22 weist eine Innenverzahnung 38 auf, welche sich mit der Untersetzungsstufe 19 der Zahnräder 13 kämmt. In der Figur 6, in der die Draufsicht auf das Hohlrad 22 gezeigt ist, sind zwei Mitnahmestege 39 deutlich zu erkennen. Die Mitnahmestege 39 sind zur Mitnahme der freien Enden der Schlingfeder 32 vorgesehen. Durch eine solche Mitnahme der freien Enden der Schlingfeder 32 wird die Schlingfeder 32 zusammengezogen, so dass eine Verdrehung der Schlingfeder 32 gegenüber dem drehfest angeordneten Ringelement 34 möglich wird. Das eine Mitnahmeelement 39 weist dabei einen Absatz 42 zur Aufnahme des einen Endes der Schlingfeder 32 auf. In Figur 7, die die Seitenansicht des Hohlrads 22 zeigt, ist dieser Absatz 42 ebenfalls deutlich erkennbar.

In Figur 5 sind außerdem Rasthaken 43 dargestellt, mittels welchen das Hohlrad 22 an dem Sonnenrad 28 verrastbar ist. Damit wird insbesondere ein Herausfallen des Hohlrades 22 aus dem Sonnenrad 28 entgegengewirkt.

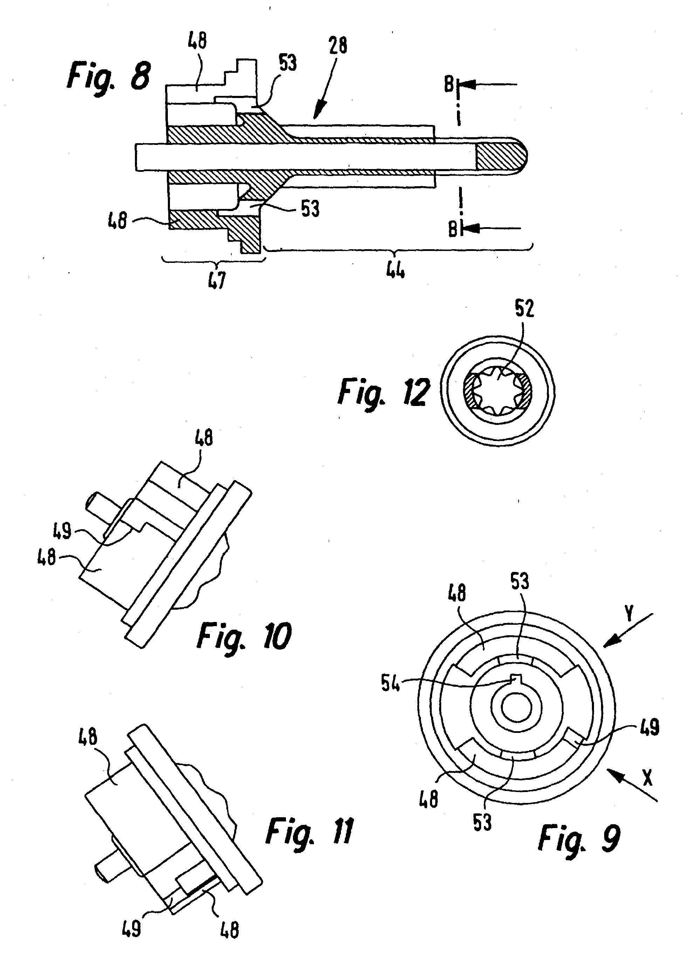

Aus der Figur 8 wird deutlich, dass das Sonnenrad 28 zwei Teilabschnitte, nämlich einen eine Verzahnung aufweisenden Verzahnungsabschnitt 44 und einen mit der Schlingfederbremse 27 zusammenwirkenden Kopplungsabschnitt 47. Die der Schlingfeder 32 zugewandte Seite des Sonnenrades 28 bzw. der Kopplungsabschnitt 47 weist zwei im Querschnitt kreisförmig gekrümmte Stege 48, die insbesondere auch in der Figur 9, die eine Vorderansicht des Sonnenrads 28 sowie den Figuren 10 und 11, die die beiden Ansichten X und Y nach Figur 9 zeigen, zu erkennen sind. In montiertem Zustand des Rohrmotors, wie insbesondere in Figur 2 gezeigt ist, ist die Schlingfeder 32 um die beiden gekrümmten Stege 48 angeordnet. Einer der Stege 48 weist einen Absatz 49 zur Aufnahme des anderen freien Endes der Schlingfeder 32 auf. In montiertem Zustand des Rohrmotors 1 greifen die beiden Mitnahmestege 39 in die Freiräume zwischen den Stegen 48 des Kopplungsabschnitts 47 des Sonnenrades 28 ein. Allerdings muss hierbei ein gewisses Spiel, d.h. ein definierter zusätzlicher Freiraum zwischen den Stegen 48 und den Mitnahmestegen 39 vorgesehen sein, um ein Zusammendrehen der Schlingfeder 32 über die Mitnahmestege 39 zu ermöglichen.

Wie in Figur 12 zu erkennen ist, die einen Schnitt entlang der Linie B/B nach Figur 8 darstellt, weist das Sonnenrad 28 entlang seiner Achse eine Seele 52 auf. Die Seele 52 ist vorteilhafterweise aus Stahl und weist einen Torx-Querschnitt auf, der dem der Außenverzahnung des Verzahnungsabschnitts 44 entspricht. Dadurch können trotz kleinerer Dimensionierung des Sonnenrades 28, welches vorteilhafterweise aus Kunststoff ausgestaltet ist, sehr hohe Drehmomente übertragen werden.

In Figur 8 und Figur 9 sind außerdem Rastbuchten 53 deutlich zu erkennen, in welche die Rasthaken 43 des Hohlrads 22 einrastbar sind. Als Montagehilfe weist das Sonnenrad 28, wie insbesondere in Figur 9 deutlich sichtbar ist, einen Montagesteg 54 auf. Zur Montage des Hohlrades 22 und dem Sonnenrad 28 wird der Montagesteg 54 in eine an dem Hohlrad 22 dafür vorgesehene Montagenut 57 eingeführt. Damit wird gewährleistet, dass der Rohrmotor 1 funktionssicher montierbar ist.

Wie in Figur 2 dargestellt, treibt das Sonnenrad 28 drei Planeten 58 an, wobei lediglich ein Planet 58 im Schnitt nach Figur 2 dargestellt ist. Die Planeten 58 rollen an einer Innenverzahnung 59 ab, die an der Getriebegehäuseinnenseite des Getriebegehäuses 33 vorhanden ist. Die Innenradverzahnung 59 erstreckt sich dabei von der dem Hohlrad 22 zugewandten Seite des Getriebegehäuses 33 bis zu einem Absatz 62, welcher die Abtriebswelle 33 axial lagert. Die Außenverzahnung des Ringelements 34 entspricht der Innenverzahnung 59, so dass das Ringelement 34 zur Montage in die Verzahnung 59 einschiebbar ist.

Zur Montage des in Figur 2 gezeigten Planetenradgetriebes 29 und dem Abdeckteil 23 weist das Getriebegehäuse 33 Rasthaken 63 auf, welche in an dem Abdeckteil 23 vorhandene Rastbuchten 64, die in Figur 1 zu sehen sind, einrastbar sind.

Bei abgeschaltetem Antrieb 3 wird ein über die Abtriebswelle 30 eingeleitetes Moment über das Planetenradgetriebe 29 auf das Sonnenrad 28 übertragen. Aufgrund des Zusammenwirkens des Kopplungsabschnitts 47 des Sonnenrads 28 und der in dem Ringelement 34 angeordneten Schlingfeder 32 wird die Schlingfeder 32 aufgeweitet und der Kraftschluss zwischen Schlingfeder 32 und Ringelement 34 erhöht. Die radial wirkenden Kräfte werden dabei von dem Ringelement 34 aufgenommen. Das übertragene Drehmoment wird über die Außenverzahnung des Ringelements 34 und der Innenverzahnung 59 des Getriebegehäuses 33 in das Getriebegehäuse 33 abgeleitet. Wie aus Figur 1 und Figur 2 deutlich wird, kann der das Ringelement 34 umgebende Abschnitt des Getriebegehäuses 33 sehr dünn dimensioniert werden. Vorteilhafterweise wird das Getriebegehäuse 33 mittels einer Befestigungsschraube über eine Schraubenbohrung 67 mit beispielsweise einem den Rohrmotor 1 umgebenden Rohr verschraubt.

## Patentansprüche

1. Rohrmotor (1) mit einem in einem Antriebsgehäuse (2) angeordneten elektromotorischen Antrieb (3) mit einer Antriebswelle (8), mit einem in einem Getriebegehäuse (33) angeordneten, mit der Antriebswelle (8) über eine Getriebeeingangswelle gekoppelten, eine Abtriebswelle (30) aufweisenden Untersetzungsgetriebe (29) und mit einer eine Schlingfeder (32) aufweisenden, gegen das Getriebegehäuse (33) wirkenden Schlingfederbremse (27) zur Drehsicherung der Abtriebswelle (30) bei insbesondere abgeschaltetem Antrieb (3), wobei die Abtriebswelle (30) und die Getriebeeingangswelle mit der Schlingfederbremse (27) zusammenwirken, **dadurch gekennzeichnet, dass** zwischen der Schlingfeder (32) und dem Getriebegehäuse (33) ein an dem Getriebegehäuse (33) drehfest angeordnetes Ringelement (34) vorhanden ist, das ein von der Abtriebswelle (30) eingeleitetes Moment in das Getriebegehäuse (3) ableitet.

2. Rohrmotor (1) nach Anspruch 1, **dadurch gekennzeichnet, dass** die Getriebegehäuseinnenseite eine Innenverzahnung (59) aufweist und die der Getriebegehäuseinnenseite zugewandte Mantelfläche des Ringelements (34) eine der Innenverzahnung (59) entsprechende Außenverzahnung aufweist.

3. Rohrmotor (1) nach Anspruch 1 oder 2, **dadurch gekennzeichnet, dass** das Ringelement (34) in das Getriebegehäuse (33) einrastbar ist.

4. Rohrmotor (1) nach einem der vorhergehenden Ansprüche, **dadurch gekennzeichnet, dass** das Ringelement (34) an seinem Umfang Rasthaken oder Rastbuchten aufweist, die mit an der Getriebegehäuseinnenseite angeordneten Rastbuchten oder Rasthaken verrastbar sind.

5. Rohrmotor (1) nach einem der vorhergehenden Ansprüche, **dadurch gekennzeichnet, dass** das Untersetzungsgetriebe ein Planetenradgetriebe (29) aufweist, wobei das Planetenradgetriebe (29) als Getriebeeingangswelle ein Sonnenrad (28) aufweist.

6. Rohrmotor (1) nach Anspruch 2 und 5, **dadurch gekennzeichnet, dass** das Planetenradgetriebe (29) Planeten (58) aufweist, die an der Innenverzahnung (59) der Getriebegehäuseinnenseite abrollen.

7. Rohrmotor (1) nach Anspruch 5 oder 6, **dadurch gekennzeichnet, dass** die der Schlingfeder (32) zugewandte Seite des Sonnenrads (28) mehrere, insbesondere zwei im Querschnitt kreisförmig gekrümmte Stege (48) aufweist, um welche die Schlingfeder (32) angeordnet ist.

8. Rohrmotor (1) nach Anspruch 7, **dadurch gekennzeichnet, dass** ein Steg (48) einen Absatz (49) zur Aufnahme des einen, zur Längsachse des Rohrmotors (1) weisenden Endes der Schlingfeder (32) aufweist.

9. Rohrmotor (1) nach Anspruch 7 oder 8, **dadurch gekennzeichnet, dass** die der Schlingfeder (32) zugewandte Seite der Abtriebswelle (22) mehrere, insbesondere zwei Mitnahmestege (39) aufweist, die mit einem definierten Spiel in die Freiräume zwischen den Stegen (49) des Sonnenrades (28) eingreifen.

10. Rohrmotor (1) nach Anspruch 9, **dadurch gekennzeichnet, dass** ein Mitnahmesteg (39) einen Absatz (42) zur Aufnahme des anderen, zur Längsachse des Rohrmotors (1) weisenden Endes der Schlingfeder (32) aufweist.

11. Rohrmotor (1) nach Anspruch 5 bis 10, **dadurch gekennzeichnet, dass** das Sonnenrad (28) eine Seele (52) aufweist.

12. Rohrmotor (1) nach Anspruch 11, **dadurch gekennzeichnet, dass** die Seele (52) einen Sechskant-Querschnitt oder einen Torx-Querschnitt aufweist.

13. Rohrmotor (1) nach einem der vorhergehenden Ansprüche, **dadurch gekennzeichnet, dass** zwischen dem Antrieb (3) und der Antriebswelle (22) ein Zahnradgetriebe (12, 13, 22) vorhanden ist.

14. Rohrmotor (1) nach Anspruch 13, **dadurch gekennzeichnet, dass** die Antriebswelle (8) des Antriebs (3) ein insbesondere schrägverzahntes Ritzel (12) aufweist, welches wenigstens ein zu der Antriebswelle (8) axial verlaufendes Zahnrad (13) antreibt.

15. Rohrmotor (1) nach Anspruch 14, **dadurch gekennzeichnet, dass** das wenigstens eine Zahnrad (13) auf einer Zahnradachse (14) drehbar gelagert ist und dass die Zahnradachse (14) an der der Schlingfederbremse (29) zugewandten Seite des Antriebsgehäuses (2) angeordnet ist.

16. Rohrmotor (1) nach Anspruch 14 oder 15, **dadurch gekennzeichnet, dass** das wenigstens eine Zahnrad (13) eine zweite Untersetzungsstufe (19) aufweist, die als Ritzel ausgestaltet ist und ein Hohlrad (22) antreibt.

17. Rohrmotor (1) nach Anspruch 14, 15 oder 16, **dadurch gekennzeichnet, dass** zwei symmetrisch angeordnete Zahnräder (13) vorhanden sind, die je eine zweite Untersetzungsstufe (19) aufweisen und ein Hohlrad (22) antreiben.

18. Rohrmotor (1) nach Anspruch 16 oder 17, **dadurch gekennzeichnet, dass** die dem Antrieb (3) abgewandte Seite des Hohlrads (22) die mit der Schlingfederbremse (32) und der Getriebeeingangswelle zusammenwirkende Antriebswelle bildet.

19. Rohrmotor (1) nach einem der vorhergehenden Ansprüche, **dadurch gekennzeichnet, dass** die einzelnen Bauteile des Rohrmotors (1) zur Montage des Rohrmotors (1) miteinander verrastbar sind.

## Claims

1. Tubular motor (1) comprising an electric motor drive (3) with a drive shaft (8) located in a drive housing (2), a reducing gear (29) with a driven shaft (30) located in a gear box (33) and coupled to the drive shaft (8) via a gear input shaft, and a wrap spring brake (27) with a wrap spring (32) that works against the gear box (33) for securing the driven shaft (30) against rotation particularly when the drive (3) is switched off, wherein the driven shaft (30) and the gear input shaft interact with the wrap spring brake (27), said tubular motor being **characterized in that** between the wrap spring (32) and the gear box (33) there is an annular element (34) arranged on the gear box (33) such that it cannot rotate, said annular element diverting into the gear box (33) a moment introduced by the driven shaft (30).

2. Tubular motor (1) according to Claim 1, **characterized in that** the inner side of the gear box has an inner toothing (59) and the surface of the annular element (34) which faces the inner side of the gear box has an outer toothing that corresponds to the inner toothing (59).

3. Tubular motor (1) according to Claim 1 or 2, **characterized in that** the annular element (34) can be latched into the gear box (33).

4. Tubular motor (1) according to any of the preceding claims, **characterized in that** the annular element (34) has on its periphery latching hooks or latching indentations which can be latched into latching indentations or latching hooks on the inner side of the gear box.

5. Tubular motor (1) according to any of the preceding claims, **characterized in that** the reducing gear has a planetary gear (29), wherein the planetary gear (29) has a sun wheel (28) as gear input shaft.

6. Tubular motor (1) according to Claims 2 and 5, **characterized in that** the planetary gear (29) has planets (58) which roll on the inner toothing (59) on the inner side of the gear box.

7. Tubular motor (1) according to Claim 5 or 6, **characterized in that** the side of the sun wheel (28) which faces the wrap spring (32) has several, in particular two, lands (48) curved in a circular manner in cross section, around which the wrap spring (32) is arranged.

8. Tubular motor (1) according to Claim 7, **characterized in that** one land (48) has a shoulder (49) for receiving the one end of the wrap spring (32) that points towards the longitudinal axis of the tubular motor (1).

9. Tubular motor (1) according to Claim 7 or 8, **characterized in that** the side of the driven shaft (22) which faces the wrap spring (32) has several, in particular two, receiver lands (39) which engage with a defined play in the free spaces between the lands (49) of the sun wheel (28).

10. Tubular motor (1) according to Claim 9, **characterized in that** one receiver land (39) has a shoulder (42) for receiving the other end of the wrap spring (32) which points towards the longitudinal axis of the tubular motor (1).

11. Tubular motor (1) according to Claims 5 to 10, **characterized in that** the sun wheel (28) has a core (52).

12. Tubular motor (1) according to Claim 11, **characterized in that** the core (52) has a hexagonal cross section or a Torx cross section.

13. Tubular motor (1) according to any of the preceding claims, **characterized in that** there is a toothed gear (12, 13, 22) between the drive (3) and the driven shaft (22).

14. Tubular motor (1) according to Claim 13, **characterized in that** the drive shaft (8) of the drive (3) has an in particular obliquely toothed pinion (12) which drives at least one gearwheel (13) that runs axially with respect to the drive shaft (8).

15. Tubular motor (1) according to Claim 14, **characterized in that** the at least one gearwheel (13) is mounted rotatably on a gearwheel axle (14) and **in that** the gearwheel axle (14) is arranged on the side of the drive housing (2) which faces the wrap spring brake (27).

16. Tubular motor (1) according to Claim 14 or 15, **characterized in that** the at least one gearwheel (13) has a second reducing stage (19) which is designed as a pinion and drives a ring gear (22).

17. Tubular motor (1) according to Claim 14, 15 or 16, **characterized in that** there are two symmetrically arranged gearwheels (13) which each have a second reducing stage (19) and drive a ring gear (22).

18. Tubular motor (1) according to Claim 16 or 17, **characterized in that** the side of the ring gear (22) which faces away from the drive (3) forms the driven shaft that interacts with the wrap spring brake (27) and the gear input shaft.

19. Tubular motor (1) according to any of the preceding claims, **characterized in that** the individual components of the tubular motor (1) can be latched with one another to assemble the tubular motor (1).

## Revendications

1. Moteur tubulaire (1) avec un entraînement (3) par moteur électrique disposé dans un carter d'entraînement (2), avec un arbre d'entraînement (8), un démultiplicateur (29) disposé dans un carter d'engrenages (33), couplé à l'arbre d'entraînement (8) par un arbre de transmission primaire et comportant un arbre de sortie (30), et avec un frein à ressort enroulé (27) comportant un ressort enroulé (32) et agissant contre le carter d'engrenages (33) afin de bloquer l'arbre de sortie (30) en rotation, en particulier lorsque l'entraînement (3) est désactivé, sachant que l'arbre de sortie (30) et l'arbre de transmission primaire agissent conjointement avec le frein à ressort enroulé (27), **caractérisé en ce qu'**il existe, entre le ressort enroulé (32) et le carter d'engrenages (33), un élément annulaire (34) disposé sur le carter d'engrenages (33) de manière à résister à la rotation, et qui transmet le couple exercé par l'arbre de sortie (30) au carter d'engrenages (3).

2. Moteur tubulaire (1) selon la revendication 1, **caractérisé en ce que** la face intérieure du carter d'engrenages comporte une denture intérieure (59), et que la surface de l'enveloppe de l'élément annulaire (34) orientée vers la face intérieure du carter d'engrenages comporte une denture extérieure correspondant à la denture intérieure (59).

3. Moteur tubulaire (1) selon l'une quelconque des revendications 1 ou 2, **caractérisé en ce que** l'élément annulaire (34) peut s'encliqueter dans le carter d'engrenages (33).

4. Moteur tubulaire (1) selon l'une quelconque des revendications précédentes, **caractérisé en ce que** l'élément annulaire (34) comporte sur sa périphérie des crochets d'arrêt ou des indentations d'arrêt qui peuvent être encliquetés sur les indentations d'arrêt ou sur les crochets d'arrêt ménagés à l'intérieur du carter d'engrenages.

5. Moteur tubulaire (1) selon l'une quelconque des revendications précédentes, **caractérisé en ce que** le démultiplicateur comporte un engrenage à roues planétaires (29), sachant que l'engrenage à roues planétaires (29) présente une roue solaire (28) comme arbre de transmission primaire.

6. Moteur tubulaire (1) selon l'une quelconque des revendications 2 et 5, **caractérisé en ce que** l'engrenage à roues planétaires (29) comporte des planétaires (58) qui se déplacent sur la denture intérieure (59) de l'intérieur du carter d'engrenages.

7. Moteur tubulaire (1) selon l'une quelconque des revendications 5 ou 6, **caractérisé en ce que** la face de la roue solaire (28) orientée vers le ressort enroulé (32) comporte plusieurs tiges circulaires recourbées (48), dont deux en particulier sont placées dans la section transversale, autour desquelles le ressort enroulé (32) est installé.

8. Moteur tubulaire (1) selon la revendication 7, **caractérisé en ce qu'**une tige (48) comporte un épaulement (49) permettant de recevoir l'une des extrémités du ressort enroulé (32) orientée vers l'axe longitudinal du moteur tubulaire (1).

9. Moteur tubulaire (1) selon l'une quelconque des revendications 7 ou 8, **caractérisé en ce que** le côté de l'arbre de sortie (22) qui est orienté vers le ressort enroulé (32) comporte plusieurs tiges d'entraînement (39), en particulier deux, qui rengagent avec un certain jeu dans les espaces libres placés entre les tiges (49) de la roue solaire (28).

10. Moteur tubulaire (1) selon la revendication 9, **caractérisé en ce qu'**une tige d'entraînement (39) comporte un épaulement (42) permettant de recevoir l'autre extrémité du ressort enroulé (32) orientée vers l'axe longitudinal du moteur tubulaire (1).

11. Moteur tubulaire (1) selon l'une quelconque des revendications 5 à 10, **caractérisé en ce que** la roue solaire (28) comporte un noyau (52).

12. Moteur tubulaire (1) selon la revendication 11, **caractérisé en ce que** le noyau (52) présente une section hexagonale ou une section Torx.

13. Moteur tubulaire (1) selon l'une quelconque des revendications précédentes, **caractérisé en ce qu'**on prévoit une transmission par engrenages (12, 13, 22) entre l'entraînement (3) et l'arbre d'entraînement (22) .

14. Moteur tubulaire (1) selon la revendication 13, **caractérisé en ce que** l'arbre de sortie (8) de l'entraînement (3) comporte un pignon (12), en particulier à denture hélicoïdale, qui entraîne au moins une roue dentée (13) axiale par rapport à l'arbre d'entraînement (8).

15. Moteur tubulaire (1) selon la revendication 14, **caractérisé en ce que** la au moins une roue dentée (13) repose de manière à pouvoir tourner sur un axe de roue dentée (14) et que l'axe de roue dentée (14) est disposé sur le côté de carter d'entraînement (2) orienté vers le frein à ressort enroulé (29).

16. Moteur tubulaire (1)selon l'une quelconque des revendications 14 ou 15, **caractérisé en ce que** la au moins une roue dentée (13) comporte un deuxième étage de démultiplication (19) qui est configuré comme un pignon et qui entraîne une roue à denture intérieure (22).

17. Moteur tubulaire (1) selon l'une quelconque des revendications 14, 15 ou 16, **caractérisé en ce qu'**il existe deux roues dentées (13) disposées de manière symétrique, qui comportent chacune un deuxième étage de démultiplication (19) et qui entraînent une roue à denture intérieure (22).

18. Moteur tubulaire (1) selon l'une quelconque des revendications 16 ou 17, **caractérisé en ce que** la face de la roue à denture intérieure (22) opposée à celle de l'entraînement (3) constitue l'arbre d'entraînement qui agit conjointement avec le frein à ressort enroulé (32) et avec l'arbre de transmission primaire.

19. Moteur tubulaire (1) selon l'une quelconque des revendications précédentes, **caractérisé en ce que** les différents composants du moteur tubulaire (1) sont encliquetables entre eux pour permettre le montage du moteur tubulaire (1).
